(19) Europäisches Patentamt
European Patent Office
Office européen des brevets

(11) **EP 0 962 368 B1**

(12) **EUROPÄISCHE PATENTSCHRIFT**

(45) Veröffentlichungstag und Bekanntmachung des Hinweises auf die Patenterteilung:
**07.12.2005 Patentblatt 2005/49**

(51) Int Cl.$^7$: **B60T 8/00**

(21) Anmeldenummer: **99107960.9**

(22) Anmeldetag: **22.04.1999**

(54) **Radbremsregelsystem für Kraftfahrzeuge mit Regelung des Fahrzustandes mittels eines mathematischen Fahrzeugmodells**

Vehicle wheel braking system with vehicle driving state control using a mathematical vehicle model

Système de freinage de roue d'un véhicule ayant une régulation de l'état de conduite du véhicule utilisant un modèle mathématique du véhicule

(84) Benannte Vertragsstaaten:
**DE ES FR GB IT SE**

(30) Priorität: **05.06.1998 DE 19825304**

(43) Veröffentlichungstag der Anmeldung:
**08.12.1999 Patentblatt 1999/49**

(73) Patentinhaber: **Bayerische Motoren Werke Aktiengesellschaft**
**80788 München (DE)**

(72) Erfinder:
• **Auffhammer, Reinhard**
  **85221 Dachau (DE)**
• **Pavic, Stefan**
  **81379 München (DE)**

(56) Entgegenhaltungen:
**EP-A- 0 775 617**      **DE-A- 4 230 295**
**DE-A- 19 515 051**      **DE-A- 19 617 590**
**US-A- 5 557 520**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf ein Radbremsregelsystem für Kraftfahrzeuge nach dem Oberbegriff des Patentanspruchs 1.

Derartige Radbremsregelsysteme sind beispielsweise durch die sog. DSC-Systeme von BMW bekannt (vgl. z. B. ATZ-Artikel, 1997, Seite 134 ff. und Seite 208 ff.). Bei derartigen Radbremsregelsystemen wird die Raddrehzahl mindestens eines Rades in Form von selektiven Bremseingriffen geregelt. Eine Regelung findet üblicherweise statt, wenn ein Ist-Fahrzustand von einem vorgegebenen Soll-Fahrzustand abweicht. Der hierfür erforderliche Regelalgorithmus basiert auf einem mathematischen Fahrzeugmodell, durch das in Abhängigkeit von verschiedenen Fahrparametern ein vorgegebener Soll-Fahrzustand berechnet wird und das in einem üblicherweise bei Radbremswegelsystemen vorhandenen elektronischen Steuergerät als Kennfeld und/oder als Algorithmus abgespeichert ist. Lediglich als Beispiel für einen möglichen Fahrzustand wird hier insbesondere die Giergeschwindigkeit genannt.

Zum weiteren technischen Hintergrund wird auf die Druckschriften DE-A-196 36 310, DE-A-42 30 295 und EP-A-0 775 617 hingewiesen.

Der vorgegebene Soll-Fahrzustand wird über die Berechnung des Fahrzeugmodells beispielsweise erstens aus Vorgaben des Fahrers als Fahrparameter (z. B. Lenkradwinkel, Gaspedalstellung), zweitens aus Fahrzeugparametern als Fahrparametern (z. B. Schwerpunktlage, Lenkungsverhalten, Reifenschräglaufsteife, Massenträgheitsmomente) und drittens aus Umgebungseigenschaften als Fahrparameter (z. B. Quemeigung der Fahrbahn, wechselnder Reibwert der Fahrbahn) gebildet. Diese Fahrparameter gehen als Modellparameter in die Berechnung des Soll-Fahrzustands mittels des Fahrzeugmodells ein. Diese verwendeten Modellparameter werden bei der Produktion des Fahrzeuges einmalig festgelegt. Veränderungen am Fahrzeug, die nach der Produktion stattfinden (z. B. andere Bereifung, andere Beladung, Alterung von Fahrwerksteilen wie Stoßdämpfer und Querlenker), d. h. insbesondere nicht erfaßte Veränderungen von Fahrzeugparametem, werden bei der Berechnung des Soll-Fahrzustandes nicht berücksichtigt. Als Folge kann der berechnete vorgegebene Soll-Fahrzustand vom eigentlich gewünschten Soll-Fahrzustand bzw. vom Ideal-Zustand abweichen. Dies führt zu einer verschlechterten Systemleistung durch unnötige und auch unberechtigte Regeleingriffe mit der Folge von Komforteinbußen und Leistungsnachteilen.

Es ist Aufgabe der Erfindung, den Komfort und die Leistungsfähigkeit eines Radbremsregelsystems eingangs genannter Art zu verbessern.

Diese Aufgabe wird durch die kennzeichnenden Merkmale des Patentanspruchs 1 gelöst.

Eine vorteilhafte Weiterbildung der Erfindung ist der Gegenstand des Patentanspruchs 2.

Erfindungsgemäß soll eine mögliche Abweichung des berechneten vorgegebenen Soll-Fahrzustands vom Ideal-Fahrzustand erkannt und korrigiert werden. Der Erfindung liegt die Erkenntnis zugrunde, daß bei bestimmten Fahrzuständen, insbesondere bei stabilen, niedrigdynamischen Fahrmanövern, der Ist-Fahrzustand ohne Regeleingriffe identisch mit dem Ideal-Zustand ist.

Hierfür sorgt die konventionelle Fahrwerksabstimmung. Wenn ein derartiger Fahrzustand vorliegt, bei dem der Ist-Fahrzustand identisch mit dem Ideal-Fahrzustand sein müßte, dürfte keine Abweichung des momentan vorgegebenen Soll-Fahrzustandes vom momentanen Ist-Fahrzustand, die zu einer Regelung führt, auftreten. Wird in diesem Fahrzustand dennoch eine Abweichung ermittelt, wird auf die Veränderung von nicht erfaßten Fahrparametern geschlossen, die nicht im Fahrzeugmodell berücksichtigt sind. Daraufhin wird entsprechend der Abweichung eine automatische Korrektur des Fahrzeugmodells im elektronischen Steuergerät vorgenommen. Diese Korrektur wird vorzugsweise beibehalten, bis eine erneute Korrektur vorgenommen wird.

Erfindungsgemäß ist mindestens eine Bedingung definiert, durch die erkannt wird, ob ein momentaner Ist-Fahrzustand vorliegt, der mit einem Ideal-Fahrzustand identisch sein müßte. Eine derartige Bedingung ist beispielsweise, daß die Fahrzeuggeschwindigkeit zumindest nahezu konstant ist und/oder daß die Lenkwinkelgeschwindigkeit und/oder die Querbeschleunigung und/oder die Ist-Giergeschwindigkeit und/oder die Abweichung einer gemessenen Ist-Giergeschwindigkeit von einer berechneten Ist-Giergeschwindigkeit jeweils unterhalb einer vorgegebenen Schwelle liegen.

Die Korrektur des Fahrzeugmodells soll nur bei einem Fahrzustand vorgenommen werden, bei dem tatsächlich die Annahme gilt, daß der Ist-Fahrzustand identisch mit dem Ideal-Fahrzustand ist.

Durch das erfindungsgemäße Radbremsregelsystem mit automatischer Korrektur des Fahrzeugmodells wird sowohl über längere Zeit (z. B. Alterungsprozesse) als auch bei Änderungen der Fahrzeugeigenschaften (z. B. andere Bereifung) ein optimaler Komfort sichergestellt. Auch wird eine eventuelle Verunsicherung des Fahrers aufgrund von unberechtigten Regeleingriffen oder aufgrund einer verschlechterten Systemleistung verhindert.

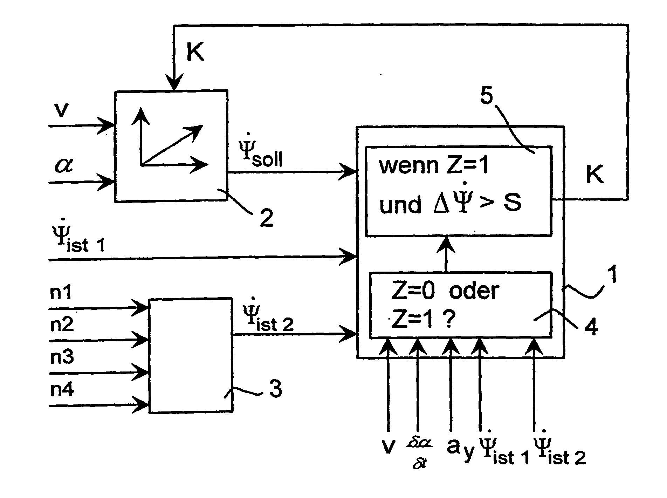

In der Zeichnung ist ein Ausführungsbeispiel der Erfindung dargestellt Sie zeigt schematisch einen Funktionsausschnitt eines elektronischen Steuergeräts für ein erfindungsgemäßes Radbremsregelsystem.

In der einzigen Figur führen zu einer Korrekturüberwachungseinheit 1 das Ausgangssignal $\dot{\psi}_{soll}$ des mathematischen Fahrzeugmodells 2, das Meßsignal $\dot{\psi}_{ist\,1}$ sowie das Ausgangssignal $\dot{\psi}_{ist\,2}$ der Giergeschwindigkeits-Berechnungseinheit 3. Das Ausgangssignal des Fahrzeugmodells 2 ist der berechnete vorgegebene Soll-Fahrzustand in Form einer Soll-Gierge-

schwindigkeit $\dot{\psi}_{soll}$. Das Meßsignal $\dot{\psi}_{ist\,1}$ entspricht der gemessenen Ist-Giergeschwindigkeit. Das Ausgangssignal $\dot{\psi}_{ist\,2}$ ist die berechnete Ist-Giergeschwindigkeit, die von der Giergeschwindigkeits-Berechnungseinheit 3 im vorliegenden Beispiel aus den vier Raddrehzahlen n1 bis n4 ermittelt wird. Die Ist-Giergeschwindigkeit entspricht hier dem Ist-Fahrzustand, die Soll-Giergeschwindigkeit entspricht dem Soll-Fahrzustand. Die Giergeschwindigkeit ist eine bevorzugte Größe zur Beschreibung des Fahrzustandes "Kurvenfahrt". Die Erfindung kann jedoch auch auf andere Fahrzustände angewandt werden.

Die Korrekturüberwachungseinheit 1 enthält eine Ideal-Fahrzustandserkennungseinheit 4 und eine Korrekturdurchführungseinheit 5. Die Ideal-Fahrzustands-Erkennungseinheit 4 enthält die Bedingung, die zur Erkennung abgefragt wird, ob ein mit einem Ideal-Fahrzustand identischer Ist-Fahrzustand vorliegt. Als Eingangsgrößen erhält die Ideal-Fahrzustands-Erkennungseinheit 4 die Fahrzeuggeschwindigkeit v, die Lenkwinkelgeschwindigkeit ($\frac{\delta\alpha}{\delta t}$), die Querbeschleunigung $a_y$, die gemessene Ist-Giergeschwindigkeit $\dot{\psi}_{ist\,1}$ und die berechnete Ist-Giergeschwindigkeit $\dot{\psi}_{ist\,2}$.

Es wird auf das Vorliegen eines Ideal-Fahrzustandes geschlossen, wenn

- die Fahrzeuggeschwindigkeit (v) zumindest nahezu konstant ist und

- die Lenkwinkelgeschwindigkeit ($\frac{\delta\alpha}{\delta t}$) unterhalb einer Schwelle liegt und

- die Querbeschleunigung ($a_y$) unterhalb einer Schwelle liegt und

- die Ist-Giergeschwindigkeit ($\dot{\psi}_{ist\,1}$ ; $\dot{\psi}_{ist\,2}$) unterhalb einer Schwelle liegt und

- die Abweichung einer gemessenen Ist-Giergeschwindigkeit ($\dot{\psi}_{ist\,1}$) von einer berechneten Ist-Giergeschwindigkeit ($\dot{\psi}_{ist\,2}$) unterhalb einer Schwelle liegt.

Ist die Bedingung erfüllt, wird von der Ideal-Fahrzustandserkennungseinheit 4 das Signal Z = 1 an die Korrekturdurchführungseinheit 5 übermittelt. Andernfalls wird das Signal Z = 0 übertragen.

Das Fahrzeugmodell 2 ist im vorliegenden Fall ein Kennfeld, das auch als Algorithmus im Steuergerät abgespeichert sein kann. Im Fahrzeugmodell 2 wird abhängig von der Fahrzeuggeschwindigkeit v und dem Lenkwinkel $\alpha$ als Fahrparameter die Soll-Giergeschwindigkeit $\dot{\psi}_{soll}$ als Soll-Fahrzustand berechnet und an die Korrekturüberwachungseinheit 1 vorgegeben. In der Korrekturüberwachungseinheit 1 wird überprüft, ob die Soll-Giergeschwindigkeit $\dot{\psi}_{soll}$ von der beispielsweise gemessenen Ist-Giergeschwindigkeit $\dot{\psi}_{ist\,1}$ abweicht. Ist diese Abweichung $\Delta\dot{\psi}$ größer als eine vorgegebene Schwelle S und liegt das Signal Z = 1 vor, wird über die Korrekturdurchführungseinheit 5 eine automatische Korrektur des Fahrzeugmodells 2 veranlaßt. Hierbei kann beispielsweise als Korrektursignal K ein Faktor an das Fahrzeugmodell 2 übergeben werden, der abgespeichert und für die nächsten Vorgaben der Soll-Fahrzustände beibehalten wird. Die Möglichkeit eines derartigen Korrekturfaktors K kann bereits im Grund-Fahrzeugmodell, das bei der Produktion vorgegeben wird, vorgesehen werden. Wesentlich ist, daß durch einen derartigen Korrekturfaktor sämtliche zukünftig vorgegebene Soll-Fahrzustände korrigiert werden.

Wesentlich im Ausführungsbeispiel ist auch die Funktion der Ideal-Fahrzustands-Erkennungseinheit 4, durch die die Grenze erkannt wird, ob bei einer Abweichung $\Delta\dot{\psi}$ geregelt werden darf (bei Z = 0) oder korrigiert werden kann (Z = 1).

**Patentansprüche**

1. Radbremsregelsystem für Kraftfahrzeuge mit Sensoren, steuerbaren Aktuatoren und einem elektronischen Steuergerät zur Regelung der Raddrehzahl eines Rades, wenn ein Ist-Fahrzustand von einem vorgegebenen Soll-Fahrzustand, der in Abhängigkeit von Fahrparametern mittels eines mathematischen Fahrzeugmodells berechnet wird, abweicht, **dadurch gekennzeichnet, daß** während des Fahrzeugbetriebs eine automatische Korrektur (K) des Fahrzeugmodells (2) entsprechend einer Abweichung ($\Delta\dot{\psi}$ >S) des momentan vorgegebenen Soll-Fahrzustandes in Form einer **Soll-Giergeschwindigkeit** ($\dot{\psi}_{soll}$) vom momentanen Ist-Fahrzustand in Form einer **Ist-Giergeschwindigkeit** ($\dot{\psi}_{ist\,1}$ ; $\dot{\psi}_{ist\,2}$) vorgenommen wird, wenn mit dem momentanen Ist-Fahrzustand ein Ideal-Fahrzustand (Z=1) vorliegt, bei dem keine Abweichung ($\Delta\dot{\psi}$), die zu einer Regelung führt, auftreten dürfte, und daß mindestens eine Bedingung definiert ist, durch die erkannt wird, ob ein mit dem Ideal-Fahrzustand identischer Ist-Fahrzustand vorliegt (Z=1), wobei eine Ideal-Fahrzustands-Erkennungseinheit (4) vorgesehen ist, durch die die Grenze erkannt wird, ob bei einer Abweichung ($\Delta\dot{\psi}$) geregelt werden darf (Z = 0) oder korrigiert werden kann (Z = 1).

2. Radbremsregelsystem nach Patentanspruch 1, **dadurch gekennzeichnet, daß** eine Bedingung zur Erkennung, ob ein mit dem Ideal-Fahrzustand identischer Ist-Fahrzustand vorliegt, ist, daß

- die Fahrzeuggeschwindigkeit (v) zumindest nahezu konstant ist und/oder
- die Lenkwinkelgeschwindigkeit ($\frac{\delta\alpha}{\delta t}$) unterhalb einer Schwelle liegt und/oder
- die Querbeschleunigung ($a_y$) unterhalb einer Schwelle liegt und/oder

- die Ist-Giergeschwindigkeit ($\dot{\psi}_{ist\,1}$ ; $\dot{\psi}_{ist\,2}$) unterhalb einer Schwelle liegt und/oder
- die Abweichung einer gemessenen Ist Giergeschwindigkeit ($\dot{\psi}_{ist\,1}$) von einer berechneten Ist-Giergeschwindigkeit ($\dot{\psi}_{ist\,2}$) unterhalb einer Schwelle liegt.

## Claims

1. A wheel brake adjustment system for vehicles comprising sensors, controllable actuators and an electronic control unit for adjusting the speed of a wheel when an actual driving state deviates from a set driving state calculated in dependence on driving parameters by using a mathematical model of the vehicle, **characterised in that** during operation of the vehicle an automatic correction (K) of the vehicle model (2) is made corresponding to a deviation ($\Delta\Psi > S$) of the instantaneous set driving state in the form of a set yawing speed ($\Psi_Z$) from the instantaneous actual driving state in the form of an instantaneous yawing speed ($\Psi_{actual\,1;}\;\Psi_{actual\,2}$) if the instantaneous actual driving state is an ideal driving state (Z = 1) at which no deviation ($\Delta\Psi$) resulting in an adjustment should occur, and at least one condition is defined for recognising whether the actual driving state is identical with the ideal driving state (Z = 1) wherein an ideal driving-state recognition unit (4) is provided for recognising the limit or criterion whether an adjustment may be made after a deviation ($\Delta\Psi$) (Z = 0) or whether a correction can be made (Z = 1).

2. A wheel brake adjustment system according to claim 1, **characterised in that** a condition for recognising whether an actual driving state is identical with the ideal driving state is that

   - the vehicle speed (v) is at least approximately constant and/or
   - the steering-angle speed ($\delta a/\delta t$) is below a threshold and/or
   - the transverse acceleration ($\alpha_y$) is below a threshold and/or
   - the actual yawing speed ($\Psi_{actual\,1;}\;\Psi_{actual}\,2$) is below a threshold and/or
   - the deviation of a measured actual yawing speed ($\Psi_{actual\,1}$) from a calculated actual yawing speed ($\Psi_{actual\,2}$) is below a threshold.

## Revendications

1. Système de régulation de freinage de roue pour véhicules automobiles, comprenant des capteurs, des actionneurs commandés et un appareil de commande électronique pour la régulation de la vitesse de rotation d'une roue lorsqu'un état de conduite réel diffère d'un état de conduite de consigne calculé en fonction de paramètres de conduite au moyen d'un modèle mathématique de véhicule,
   **caractérisé en ce que**
   pendant le fonctionnement du véhicule une correction (K) automatique du modèle de véhicule (2) est effectuée en fonction d'un écart ($\Delta\psi > S$) de l'état de conduite de consigne momentanément défini sous la forme d'une vitesse de lacet de consigne ($\psi_{consigne}$) par rapport à l'état de conduite réel momentané sous la forme d'une vitesse de lacet réelle ($\psi_{réel\,1}$ ; $\psi_{réel\,2}$), si l'état de conduite réel momentané est un état de conduite idéal (Z=1) dans lequel aucun écart ($\Delta\psi$) entraînant une régulation ne devrait se produire, et
   au moins une condition permettant d'identifier la présence d'un état de conduite réel (Z=1) identique à l'état de conduite idéal est définie,
   une unité d'identification d'état de conduite idéal (4) est prévue, laquelle permet d'identifier la limite pour savoir si en présence d'un écart $\Delta\psi$ on peut réguler (Z = 0) ou corriger (Z = 1).

2. Système de régulation de freinage de roue selon la revendication 1,
   **caractérisé en ce qu'**
   une condition pour identifier la présence d'un état de conduite réel identique à l'état de conduite idéal est la suivante :

   - la vitesse du véhicule (v) est du moins approximativement constante, et/ou
   - la vitesse angulaire de direction ($\frac{\delta\alpha}{\delta t}$) est inférieure à un seuil, et/ou
   - l'accélération transversale ($a_y$) est inférieure à un seuil, et/ou
   - la vitesse de lacet réelle ($\psi_{réel\,1}$ ; $\psi_{réel\,2}$) est inférieure à un seuil, et/ou
   - l'écart d'une vitesse de lacet réelle mesurée ($\psi_{réel\,1}$) par rapport à une vitesse de lacet réelle calculée ($\psi_{réel\,2}$) est inférieur à un seuil.